# EUROPEAN PATENT APPLICATION

(11) **EP 4 795 962 A1**
(43) Date of publication of application: **26.08.2026**
(21) Application number: 26382216.5
(22) Date of filing: 23.02.2026
(51) Int. Cl.: A43B 1/025, A43B 1/06, A43B 7/144, A43B 13/02, A43B 13/14, A43B 13/16, B29D 35/12, B29D 35/14

(54) **METHOD FOR MANUFACTURING FOOTWEAR SOLE STRUCTURES AND FOOTWEAR SOLE STRUCTURE MANUFACTURED USING SAID METHOD**

(30) Priority: 24.02.2025 ES 202530150
(71) Applicant: Proinvex Urban S.L., 03203 Elche - Alicante (ES)
(72) Inventor: URBAN BRU, Francisco Manuel, 03203 ELCHE (Alicante) (ES)
(74) Representative: Herrero & Asociados, S.L.

(57) **Abstract**

The manufacturing method for footwear sole structures comprises the following stages: joining a wall (2) around a base (3) by means of an adhesive; introducing the base (3) and the wall (2) joined to each other into a mold (8, 9); compressing the base (3) and the wall (2), reducing the thickness of the base (3) and the wall (2); curing the base (3) and the wall (2) by applying heat, melting the adhesive so that the wall (2) and the base (3) slide relative to each other and the wall (2) remains joined around the base (3); and removing the structure (1) from the mold with the wall (2) joined to the base (3).

It allows the structure to be manufactured without the need to place a support sole, facilitating and decreasing the costs associated with its manufacture.

## Description

### Object of the invention

The present invention refers to a manufacturing method for footwear structures and to a footwear structure manufactured by said method. In particular, said footwear structure is a hollow structure or shell formed from rope or jute.

### Background of the invention

A type of footwear is known in which its sole is formed from rope or jute that presents an exposed perimeter in which the rope lines are observed, one over another, forming a wall, supported on a support sole of the footwear, usually made of rubber, said wall of the sole and said support sole forming a hollow structure or shell, the interior of which may be filled with rigid cork or with the rope itself.

Thus, these soles are heavy and rigid, that is, they are very inflexible, with the consequent discomfort when walking. Furthermore, when it rains and the sole gets wet, not only does the outer rope of the wall of the sole soak through and become drenched, but the interior also soaks through via the rope wall, thus increasing the weight of the support sole.

To solve these problems, the footwear described in document EP4389407 A1 was designed, by the same applicant as the present application, which describes a footwear sole to lighten and increase the flexibility of soles with rope or jute, to gain comfort for the user and avoiding the problems of soles with rope or cork fillings when they get wet.

To this end, this document describes the use of polyurethane as a filling material, since it is a light, flexible material that does not become drenched or increase in weight when it gets wet.

### Description of the invention

Therefore, an objective of the present invention is to provide a manufacturing method for a footwear sole structure and a structure manufactured by means of said method with which the structure can be manufactured without the need to place the support sole, facilitating and decreasing the costs associated with its manufacture, providing versatility adaptable to any footwear manufacturing need.

In this way, the footwear manufacturer can be provided with the structure according to the present invention and the manufacturer can decide what type of filling to use and how it is joined to the rest of the footwear components, etc.

That is, the most basic unit is provided, which is the structure, from which the manufacture of the footwear sole can be finished, without conditioning the use of one technique or another, or one material or another.

With the method and the structure of the invention, the aforementioned drawbacks are resolved, presenting other advantages that will be described below.

The manufacturing method and the structure according to the present invention are described in the corresponding independent claims, and the dependent claims include additional features that are optional.

Specifically, in the manufacturing method for footwear sole structures, the structure comprises a base and a wall that surrounds the base, the method comprising the following stages:
- Joining the wall around the base by means of an adhesive;
- Introducing the base and the wall joined to each other into a mold;
- Compressing the base and the wall, reducing the thickness of the base and of the wall;
- Curing the base and the wall by applying heat, melting the adhesive so that the wall and the base slide relative to each other and the wall remains joined around the base; and
- Removing the structure from the mold with the wall joined to the base.

In this way, it is possible to manufacture a footwear sole structure in which the presence of a support sole is not essential, which facilitates and cheapens its manufacture.

The structure object of the invention is provided as a base component for the manufacture of soles, without including a support sole. The structure is conceived so that, in a later footwear manufacturing stage, a manufacturer incorporates said support sole into it to complete the sole, since its final use so requires. In this way, the footwear manufacturer is offered the flexibility to choose and join the support sole by means of the technique they consider most appropriate.

Preferably, the adhesive has a melting temperature higher than 60°C, for example, 130°C. Thus, it is guaranteed that during the curing stage, the adhesive melts, allowing the sliding or movement of the wall over the base, preventing the wall from separating from the base or any accidental breakage from occurring.

The manufacturing method according to the present invention may further comprise the placement of a wedge joined to the base, in the case of wanting to manufacture footwear with a wedge.

Furthermore, during the compression of the base and the wall, the pressure applied to the base is the same as the pressure applied to the wall.

According to a preferred embodiment, the base has a thickness between 10 and 20 mm, before the compression stage, the thickness of the base being reduced to between 4 and 10 mm, after the compression stage, although it could have any suitable thickness.

For example, the curing stage has a duration between 3 and 20 minutes, although it could have any suitable duration.

Preferably, the curing stage is carried out at a temperature between 60°C and 140°C to guarantee the melting of the adhesive, although it could be carried out at any suitable temperature.

According to a preferred embodiment, the base is made of a textile material, such as, for example, porous non-woven fabric, and the wall is made of a braided material, for example, rope, jute, raffia, cotton, metallized fabric or plastic material, etc.

Furthermore, the wedge can be made of cork or any other suitable material.

According to a second aspect, the present invention also refers to a footwear sole structure manufactured with the manufacturing method as described above.

### Brief description of the drawings

For a better understanding of what has been set forth, some drawings are attached in which, schematically and only by way of non-limiting example, a practical case of embodiment is represented.
Figure 1 is a sectional perspective view of the footwear sole structure before applying the method according to the present invention;
Figures 2a to 2d are schematic side elevation views of the manufacturing method for the footwear sole structure according to the present invention; and
Figures 3a to 3d are schematic side elevation views of the manufacturing method for the footwear sole structure according to the present invention, the structure comprising a wedge.

### Description of a preferred embodiment

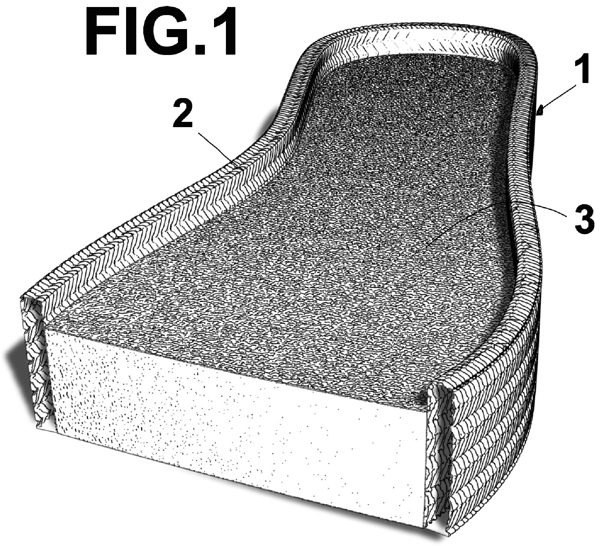

In Figure 1, a structure (1) for a footwear sole is shown before the application of the manufacturing method according to the present invention, comprising a base (3) and a wall (2) that surrounds the base (3), the base (3) and the wall (2) being joined by means of an adhesive, which can be applied to the base (3), to the wall (2) or to both.

The base (3) is preferably made of a highly compressible textile material, which has a sufficient height so that the wall (2) can be glued around it and held. For its part, the wall (2) is constituted by a braided material, such as rope, jute, raffia, cotton, metallized fabric or plastic material, for example, conferring a characteristic aesthetic appearance.

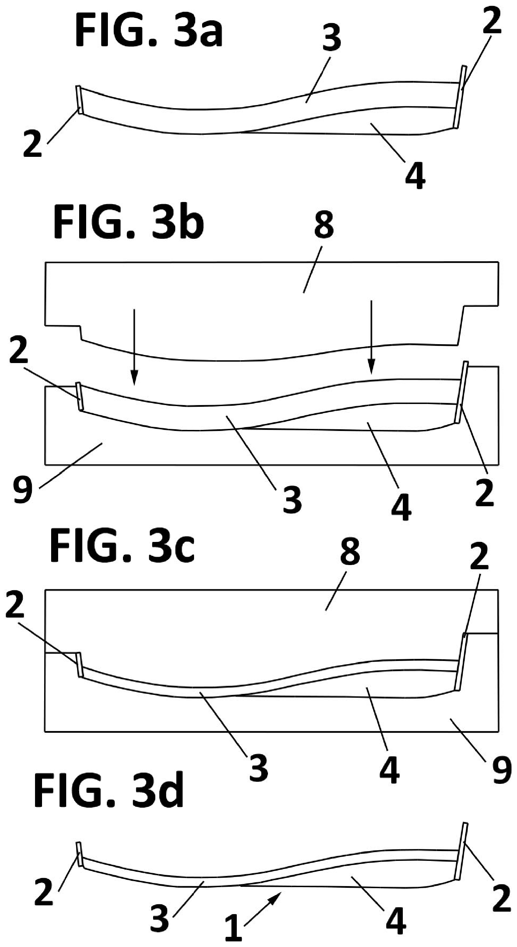

In a particular embodiment, the structure (1) may incorporate a wedge (4), as shown in Figures 3a to 3d, which is joined to the base (3) and provides an additional elevation to the footwear in its rear part.

The wedge (4) can be manufactured in cork or similar, which grants it properties of lightness and greater comfort, although it could be of any suitable material.

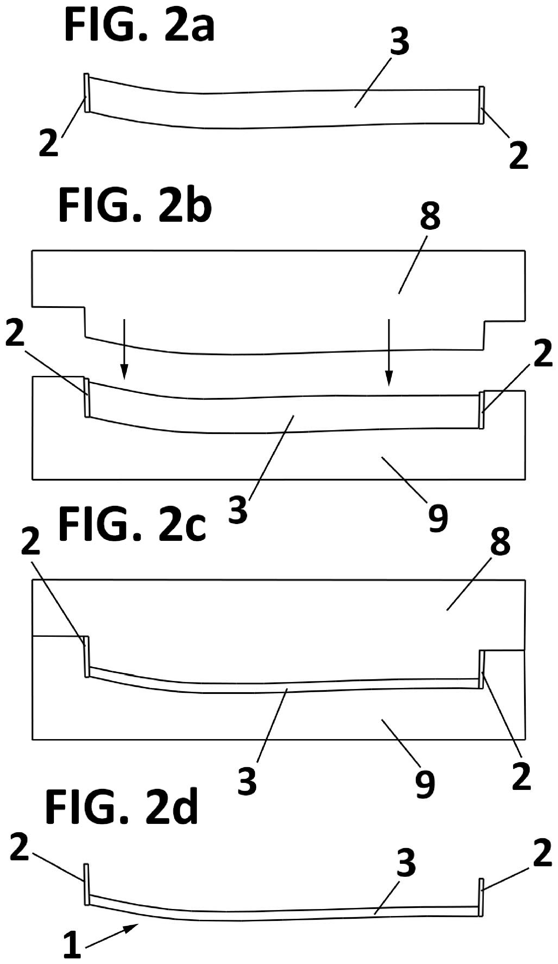

A first embodiment of the manufacturing method of the structure (1) is illustrated in Figures 2a to 2d, comprising the following stages:
First, as can be seen in Figure 2a, the joining of the components that form the structure (1) is carried out, that is, the wall (2) is joined around the base (3) by means of an adhesive. This adhesive presents the characteristic that its melting temperature is higher than 60°C.

Next, the base (3) and the wall (2) joined by means of the adhesive are placed in a suitable mold to subject them to pressure and heat, as shown in Figure 2b. This mold is formed by an upper part (8) or lid and by a lower part (9) or base.

As shown in Figure 2c, the mold is then closed and pressure is applied to the base (3) and the wall (2), reducing the thickness of the base (3) and the wall (2). During this compression, the pressure applied to the base (3) is the same as that exerted on the wall (2), guaranteeing an adequate compaction of the materials.

In a preferred embodiment, the base (3) has an initial thickness between 10 and 20 mm, for example, 18 mm, and after compression, its thickness is reduced to a range between 4 and 10 mm, for example.

With the mold closed, heat is also applied to cure the structure (1). The application of heat causes the melting of the adhesive, taking it to a fluid state. This melting allows a final sliding or readjustment between the wall (2) and the base (3), which facilitates the release of tensions accumulated during the previous compression stage. This ensures a stable union without breakages once the adhesive cools and solidifies. Curing is carried out, for example, at temperatures between 60°C and 140°C, with a duration comprised between 3 and 20 minutes.

Finally, as can be seen in Figure 2d, the structure (1) is extracted from the mold with the wall (2) fixed to the base (3) in its position of use.

In a variant of the method, shown in Figures 3a to 3d, a wedge (4) is incorporated into the base (3) before its introduction into the mold. The wedge (4) can be manufactured in cork or another similar material to provide a reduced weight and greater comfort.

## Claims

1. Manufacturing method for footwear sole structures, the structure (1) comprising a base (3) and a wall (2) that surrounds the base (3), **characterized in that** it comprises the following stages:
- joining the wall (2) around the base (3) by means of an adhesive;
- introducing the base (3) and the wall (2) joined to each other into a mold (8, 9);
- compressing the base (3) and the wall (2), reducing the thickness of the base (3) and of the wall (2);
- curing the base (3) and the wall (2) by applying heat, melting the adhesive so that the wall (2) and the base (3) slide relative to each other and the wall (2) remains joined around the base (3); and
- removing the structure (1) from the mold with the wall (2) joined to the base (3).

2. Manufacturing method for footwear sole structures according to claim 1, in which the adhesive has a melting temperature higher than 60°C.

3. Manufacturing method for footwear sole structures according to any one of the preceding claims, further comprising the placement of a wedge (4) joined to the base (3).

4. Manufacturing method for footwear sole structures according to claim 1, in which during the compression of the base (3) and the wall (2), the pressure applied to the base (3) is equal to the pressure applied to the wall (2).

5. Manufacturing method for footwear sole structures according to claim 1 or 4, in which the base (3) has a thickness between 10 and 20 mm, before the compression stage, and a thickness between 4 and 10 mm, after the compression stage.

6. Manufacturing method for footwear sole structures according to claim 1, in which the curing stage has a duration between 3 and 20 minutes.

7. Manufacturing method for footwear sole structures according to claim 1, in which the curing stage is carried out at a temperature between 60°C and 140°C.

8. Manufacturing method for footwear sole structures according to any one of the preceding claims, in which the base (3) is made of a textile material.

9. Manufacturing method for footwear sole structures according to any one of the preceding claims, in which the wall (2) is made of a braided material.

10. Manufacturing method for footwear sole structures according to claim 9, in which the braided or non-braided material is made of rope, jute, raffia, cotton, metallized fabric or plastic material.

11. Manufacturing method for footwear sole structures according to claim 3, in which the wedge (4) is made of cork.

12. Footwear sole structure manufactured with the manufacturing method according to any one of the preceding claims.
